# EUROPÄISCHE PATENTSCHRIFT

(11) **EP 2 747 619 B1**
(45) Veröffentlichungstag und Bekanntmachung des Hinweises auf die Patenterteilung: **28.08.2019**
(21) Anmeldenummer: 12758756.6
(22) Anmeldetag: 21.08.2012
(51) Int. Cl.: A47J 31/60

(54) **REINIGUNGSDOSIERER**
CLEANING DISPENSER
DOSEUR DE NETTOYAGE

(30) Priorität: 25.08.2011 DE 102011111177
(43) Veröffentlichungstag der Anmeldung: 02.07.2014
(73) Patentinhaber: Aquis Wasser-Luft-Systeme GmbH, Lindau, Zweigniederlassung Rebstein, 9445 Rebstein (CH)
(72) Erfinder: WALLERSTORFER, Kurt, A-5204 Strasswalchen (AT); HEITELE, Bernd, CH-9437 Marbach (CH)
(74) Vertreter: Otten, Roth, Dobler & Partner mbB Patentanwälte
(86) Internationale Anmeldenummer: PCT/EP2012/003538
(87) Internationale Veröffentlichungsnummer: WO 2013/026567

(56) Entgegenhaltungen:
- EP-A1- 1 210 894
- EP-A1- 2 078 481
- WO-A1-2013/023963
- CH-A5- 665 945
- DE-A1-102009 051 865
- US-A1- 2009 293 733

## Beschreibung

Die vorliegende Erfindung betrifft eine Getränkemaschine nach dem Oberbegriff des Anspruchs 1.

### Stand der Technik:

Handelsüblich sind Getränkemaschinen bekannt, insbesondere auch zur Aufbereitung von Heißgetränken. Hierin wird in der Regel eine Getränkebasis, wie zum Beispiel Suppen-, Kakao-Kaffeepulver oder dergleichen, in einer Aufbereitungseinheit der Maschine mit heißem Wasser und/oder Dampf vermengt und/oder aufgebrüht.

Des Weiteren sind Getränkemaschinen in der Form von Kaffeevollautomaten bekannt, bei denen aus in einem entsprechenden Behälter vorgehaltenen Kaffeebohnen direkt vor dem Aufbrühen gemahlenes Kaffeepulver einer zur Aufbereitung von Kaffee vorgesehenen Brüheinheit zugeführt und mittels unter Druck durchgepresstem Dampf zu dem von dem Kaffeevollautomaten abgegebenen Kaffee aufgebrüht wird.

Zur Aufrechterhaltung der Funktionalität des Kaffeevollautomatens, insbesondere aller seiner zur Aufbrüheinheit gehörenden Komponenten sind von Zeit zu Zeit bestimmte Service-, insbesondere Reinigungsvorgänge erforderlich. Entsprechendes gilt auch für die oben angegebenen Getränkemaschinen.

Verschiedene Getränkemaschinen mit automatischen Reinigungsvorgängen sind bereits bekannt geworden. Derartige Getränkemaschinen sind beispielsweise in der EP 1578235, US 4305328, DE 19729220 A1, EP 1901639 B1 und der US 20009/0293733 A1 und der WO 2013/023963 A1 beschrieben.

Weiterhin sind in verschiedenen Schriften Dosierpumpen zur Zugabe von Flüssigkeiten bei Getränkemaschinen bekannt geworden, beispielsweise in der DE 102005024059 A1, EP 1803934 A1, EP 1863723 B1 und DE 3709161 C2.

### Aufgabe und Vorteile der Erfindung:

Der vorliegenden Erfindung liegt die Aufgabe zugrunde, eine Getränkemaschine gemäß des einleitend dargelegten Standes der Technik zu verbessern.

Gelöst wird diese Aufgabe gemäß eines ersten Aspektes der Erfindung ausgehend von einer Getränkemaschine nach dem Oberbegriff des Anspruchs 1 durch dessen kennzeichnende Merkmale.

In den Unteransprüchen werden vorteilhafte und zweckmäßige Weiterbildungen angegeben.

Dementsprechend betrifft die vorliegende Erfindung eine Getränkemaschine, insbesondere zur Aufbereitung von Heißgetränken, mit einem als Wechselbehälter ausgebildeten Flüssigreinigerbehälter. Dieser zeichnet sich dadurch aus, dass er als austauschbares Teil einer Flüssigreiniger-Dosiervorrichtung ausgebildet ist. Hierdurch ist der Nachfüllvorgang mit Flüssigreiniger an der erfindungsgemäßen Maschine vereinfacht.

Dies hat mithin den Vorteil, dass jene Teile der Dosiervorrichtung, die mit dem Flüssigreiniger direkt in Verbindung kommen, in den Flüssigreiniger-Wechselbehälter integriert werden können. Dieser kann somit befüllt und anschließend vollständig verschlossen werden.

Ein derart geschlossener Flüssigreiniger-Wechselbehälter hat für den Anwender den Vorteil, dass er ihn lediglich aus einer Verpackung entnehmen und mit einem im Getränkemaschine befindlichen, leeren Reinigunsgmittel-Wechselbehälter tauschen muss. Aufgrund dieser abgeschlossenen Ausführungsform kann jeglicher Kontakt mit dem im Flüssigreiniger-Wechselbehälter bevorrateten Flüssigreiniger in benutzungs- und handhabungsfreundlicher Weise vermieden werden.

Erfindungsgemäß umfasst der austauschbare Wechselbehälter eine Dosierpumpe für den Flüssigreiniger. Dies ist insbesondere im Hinblick auf einen nach außen hin abgeschlossenen Komponentenaufbau vorteilhaft, wodurch, wie oben beschrieben, ein unkomplizierter und sauberer Behältertausch ermöglicht werden kann.

Weiterhin wird erfindungsgemäß die Getränkemaschine mit einer Leitungskupplung zwischen dem Wechselbehälter und der Getränkemaschine zur Ankupplung einer Flüssigreinigerleitung und mit einer Antriebskupplung zur mechanischen Ankupplung eines Antriebs der Dosierpumpe versehen.

Dies ermöglicht zum einen eine durchgehende Flüssigreinigerleitung und somit die erfindungsgemäße Reinigerzufuhr in Verbindung mit einem Wechselbehälter und zudem die Möglichkeit, den Antrieb für die Dosierpumpe außerhalb des Wechselbehälters maschinenseitig vorzusehen. Es ist insbesondere im Hinblick darauf von Bedeutung, als dass eine wenigstens teilweise in den Flüssigkeitsbehälter integrierte Flüssigkeitspumpe mit dem Wechselbehälter ausgetauscht wird. Der Antriebsmotor hingegen kann maschinenseitig verbleiben, wodurch der Aufwand auf Seiten des Wechselbehälters reduziert ist.

Bevorzugt wird die Leitungskupplung für die Reinigerleitung so ausgebildet, dass sie während des Betriebs fest steht. Dies verringert zum einen den konstruktiven Aufwand und erhält die Dichtigkeit der Reinigerleitung.

Darüber hinaus wird die Dosierpumpe so ausgestaltet, dass sie einen Rotor umfasst, wobei ein mit dem Rotor zu kuppelnder Antriebsmotor gegenüber der Achse des Pumpenrotors oder dessen Antriebskupplung versetzt angeordnet ist. Zum einen ist die mechanische Ankupplung eines Pumpenantriebs über eine Drehbewegung einfacher realisierbar als beispielsweise über einen Stößel, vor allem im Hinblick auf die Austauschbarkeit des Wechselbehälters. Zum anderen kann dann, wenn der Antriebsmotor nicht fluchtend mit dem Pumpenrotor steht eine Platz sparende Anordnung des Antriebsmotors maschinenseitig vorgesehen werden. Dies ist insbesondere im Bodenbereich eines Wechselbehälters von Vorteil, bei dem das Volumen möglichst vollständig für die Reinigeraufnahme nutzbar sein soll.

Weiterhin ist es von Vorteil, wenn der Flüssigkeitsanschluss des Wechselbehälters gegenüber der Achse des Pumpenrotors der Dosierpumpe versetzt angeordnet ist. Zum einen wird hierdurch die feststehende Ausgestaltung der ersten Kupplung zur Verbindung der Flüssigkeitsreinigerleitung erleichtert. Zum anderen ist auch hierdurch eine insgesamt flachere Bauweise im Bodenbereich des Wechselbehälters möglich.

In einer bestimmten Ausführungsform wird hierzu wenigstens ein Getriebeelement zur Überbrückung eines Versatzes und/oder eines Winkels zwischen dem Rotor oder der Antriebskupplung und dem Antriebsmotor der Dosierpumpe vorgesehen. Durch die Verwendung eines solchen Getriebeelementes, beispielsweise eines Zahnrades oder dergleichen wird eine Möglichkeit gegeben, die beschriebene flache Bauweise am Boden des Wechselbehälters bei voneinander beabstandeten Kupplungen für den mechanischen Antrieb der Dosierpumpe einerseits und für die Flüssigkeitsreinigerleitung andererseits zu realisieren.

Darüber hinaus kann ein Getriebeelement auch als Übersetzungs- oder Untersetzungsmittel dienen, um beispielsweise auch einen leistungsärmeren oder langsameren Motor einsetzen zu können. Hierbei kommen alle möglichen Getriebeelemente in Frage, beispielsweise könnte auch ein Riementrieb oder dergleichen vorgesehen sein. In einer besonders kompakten und damit Platz sparenden Bauform wird zudem eine feststehende Reinigerleitung koaxial zu einem rotierenden Antriebs- oder Getriebeelement, z. B. einem Zahnrad angeordnet.

In einer bevorzugten Ausführungsform kann die Dosiereinheit ein sowohl rotatorisch als auch axial beweglich ausgebildetes Dosierelement aufweisen. Bei einer Pumpe kann dies beispielsweise ein Pumpenkolben sein, der neben einer Hubbewegung entlang seiner Längsachse auch eine Drehbewegung ausführen kann. Zur Steuerung seiner Axialposition und/oder seiner Winkelposition in Bezug auf eine Rotationsbewegung um seine Längsachse kann in weiter vorteilhafter Weise eine Kulisse oder Kulissensteuerung vorgesehen sein. Hierzu kann, beispielsweise bei einer vorzugsweise über ein entsprechendes Kupplungselement auf den Kolben aufgeprägten Drehbewegung, eine zwangsgeführte axiale Kolbenbewegung durch abfahren einer Steuerkurve, durch einen am Kolben ausgebildeten Steuernocken, zur Generierung eines Förderhubes bewerkstelligt werden.

Denkbar ist aber auch eine umgekehrte Antriebsweise, in der Art, dass der Kolben mit einer ihm seine axialen Hubbewegungen aufprägenden Antriebseinheit gekoppelt ist und er entsprechend seiner axialen Position im Förderzylinder zwangsgeführt gedreht wird, beispielsweise ebenfalls über eine Kulissensteuerung. Eine solche Kulissensteuerung hat den Vorteil, dass jedem Positionspunkt entlang einer axialen Bewegung exakt ein entsprechender Drehwinkel zugeordnet werden kann, bzw. umgekehrt.

Zur Generierung eines bestimmten Fördervolumens pro Förderhub können zwischen Kolben und Zylinder Dichtmittel in der Art ausgebildet sein, dass sie einerseits in Draufsicht rund um den Kolben, bzw. in der Zylinderinnenwand herum verlaufen sind und gleichzeitig abhängig vom Umlaufwinkel auch in Richtung der Längserstreckung des Kolbens und/oder der Zylinderinnenwand verlaufend ausgebildet bzw. in einer entsprechenden Aufnahme angeordnet sind.

Freigestellt bilden sie in dieser Einbaulage in etwa eine Kontur aus, die sich ergibt, wenn ein Gummiring an zwei gegenüberliegenden Punkten mit jeweils zwei Fingern erfasst und diese gegeneinander verdreht werden. Ausgehend von diesen Punkten ergibt sich dabei in etwa anfänglich die Kontur eines Kreisabschnittes, welcher in eine zum gegenüberliegenden Kreisabschnitt schräg verlaufende Gerade übergeht.

Mit zwei zwischen Kolbenaußenwand und Zylinderinnenwand angeordneten, axial voneinander beabstandeten Dichtstrukturen, die in etwa diesen grob beschriebenen Verlauf aufweisen, kann in Zusammenwirkung mit zwei axial am Kolben und/oder im Zylinder ausgebildeten Öffnungen, z. B. in der Form von Förderschlitzen, mittels einer Dreh-Hubbewegung des Kolbens im Zylinder eine Pumpe mit exakt definierbarem Fördervolumen realisiert werden.

Ein Förderschlitz kann entlang seines Verlaufs sowohl in Längsrichtung des Kolbens und/oder der Zylinderwand als auch in dessen bzw. deren Umfangrichtung verlaufende Komponenten aufweisen. Ein erster Förderschlitz kann bei einer leitenden Verbindung mit dem Vorratsvolumen für den Flüssigreiniger einen Zufluss in den Raum der das Fördervolumen ausbildet realisieren. Nach Trennung dieser fluidleitenden Verbindung ist das Fördervolumen solange nach außen hin geschlossen, bis eine zweite Öffnung, vorzugsweise ebenfalls ein Förderschlitz, in eine leitende Verbindung mit einem aus dem Flüssigreiniger-Wechselbehälter herausführenden Flüssigreiniger-Auslasskanal gebracht wird. Durch geeignete Konstruktive Maßnahmen kann bei einer
fortgesetzten Bewegung des Förderkolbens das im Fördervolumen befindliche Flüssigreiniger in diesen Flüssigreiniger-Auslasskanal und im Weiteren, mittels nachfolgend noch näher zu beschreibender Verbindungen in die Getränkemaschine gefördert werden.

Eine mögliche konstruktive Lösung besteht darin, dass der Kolben während einer Überdeckung seiner Auslassöffnung aus den zwischen den beiden oben beschriebenen Dichtelementen liegenden Fördervolumen mit dem Flüssigreiniger-Auslasskanal in seiner Höhenposition angehoben wird, so dass das Flüssigreiniger über den Flüssigreiniger-Auslaufkanal in die Maschine laufen kann, vorzugsweise gravitationsbedingt. Nach entsprechender Entleerung des Hubvolumens wird diese fluidleitende Verbindung mit dem Flüssigreiniger-Auslasskanal wieder unterbrochen und nach entsprechender Weiterbewegung des Hubkolbens sowohl in Drehrichtung als auch in Hubrichtung wieder eine Überdeckung der Einlassöffnung mit dem Vorratsraum des Flüssigreiniger-Wechselbehälters bewirkt, um den nächsten Dosiervorgang einzuleiten.

Alternativ zu einer Hub-Drehkolbenpumpe könnte z. B. auch eine Schlauchpumpe als Dosierung in Anwendung kommen. Auch hiermit ist eine sehr genaue Dosierung realisierbar. Denkbar sind aber auch andere Pumpenformen zur Förderung von Flüssigreiniger aus dem als Wechselbehältnis ausgebildeten Wechselbehälter in die Getränkemaschine.

Zur Realisierung einer einfach herzustellenden und zuverlässig wirkenden Verbindung zwischen der im Flüssigreiniger-Wechselbehälters vorgesehenen Flüssigreiniger-Dosiervorrichtung und der im Getränkemaschinen angeordneten Antriebseinheit kann in weiter vorteilhafter Weise ein insbesondere positionsbewegliches Kupplungselement vorgesehen sein. Diese Positionsbeweglichkeit kann sich auf eine radiale und/oder axiale Position beziehen. Auch eine Verschwenkbarkeit gegenüber einer Längsachse der Antriebseinheit und/oder eines hiervon angetriebenen, ein Drehmoment abgebenden Antriebselementes und/oder eines die somit erzeugte Drehbewegung aufnehmenden Anschlusselementes der Dosiereinheit kann hiermit in vorteilhafter Weise realisiert werden.

Damit können einerseits anwenderfreundlich größere Einführ- bzw. Aufsteckwinkel beim Wechsel von Flüssigreiniger-Wechselbehälters mit dennoch gewährleisteter, betriebsgemäß vorgesehener Montage ermöglicht werden. Andererseits können hierdurch auch größere Fertigungstoleranzen sowohl für den Getränkemaschine als auch insbesondere für die als Wechselbehältnis vorgesehenen Flüssigreiniger-Wechselbehälters zugelassen bzw. ausgeglichen werden. Insbesondere bei sehr beengten Platzverhältnissen, wie dies aufgrund der immer kompakter werdenden Bauweise von Getränkemaschinen der Fall ist, kann dies einen deutlichen Zuwachs an Bedienkomfort bewirken.

In weiter vorteilhafter Weise kann das Kupplungselement als federelastisches Element ausgebildet sein und/oder mittels eines solchen mit dem antriebsseitigen Abtrieb oder dem dosiereinheitseitigen Antrieb verbunden sein. Eine weitere Erhöhung der Bedienerfreundlichkeit kann durch das Vorsehen eines Zentrierelementes ermöglicht werden. Dieses kann beispielsweise in der Form eines Zentrierzapfens ausgebildet sein, welcher seinerseits Mitnehmer, beispielsweise in der Form von Zähnen oder anderen entsprechenden geometrischen Konturen aufweisen kann, um eine entsprechende Drehmoment- bzw. Drehbewegungsübertragung realisieren zu können. Vorzugsweise sind auch Mittel für einen Höhenausgleich vorgesehen, beispielsweise in der Form des zuvor genannten, federelastischen Elementes. Ein solcher Höhenausgleich kann z. B. den Hubweg des Hubkolbens plus gegebenenfalls noch einen zusätzlichen, z. B. sicherheitshalber vorzusehenden Federweg umfassen.

Die Drehmomentübertragung kann insbesondere vorteilhaft formschlüssig erfolgen. Dies ermöglicht eine exakte Erfassung des Pumpenzustandes, dass heißt beispielsweise beim Hub-Drehkolben dessen exakte Erkennung seiner Winkelposition und/oder seiner Position entlang der von ihm durchzuführenden Hubbewegung. Dies kann beispielsweise durch das Vorsehen von Rotor-Positionserkennungsmitteln realisiert werden. Entsprechend der erkannten Position ist auch eine exakte Kontrolle der zu fördernden Menge an Flüssigreiniger möglich. Dies kann insbesondere dann von Interesse sein, wenn eine sukzessive Flüssigreiniger-Dosierung innerhalb eines Förderhubes gewünscht ist. Damit lässt sich beispielsweise eine Vorreinigung realisieren, die nach einer bestimmten Einwirkzeit durch weiteres Zudosieren oder erneutes Eindosieren von Flüssigreiniger in den Getränkemaschine im Sinne einer möglichen Unterteilung in einen "Vorreinigungsabschnitt" und einen sogenannten "Hauptreinigungsabschnitt" ermöglicht. Auch ein Mischen mit einer anderen Flüssigkeit, insbesondere mit Wasser, z. B. zur Bereitstellung einer größeren Reinigungsmenge, mittels der eine größere Oberfläche von Verunreinigungen gereinigt werden kann, kann hierdurch in vorteilhafter Weise realisiert werden.

In dieser Weise können auch Fördermengenkontrollmittel und/oder Förderrichtungsumkehrmittel realisiert werden. Hierzu kann in einer besonders bevorzugten Ausführungsform lediglich die Drehrichtung der Antriebseinheit umgekehrt werden, um z. B. Wasser aus einem entsprechend vorgesehenen Anschluss an dem Flüssigreiniger-Auslasskanal ansaugen zu können und in entsprechender Weise mit dem darin befindlichen Flüssigreiniger zu mischen.

Bezüglich einer Mischung von Flüssigreiniger mit einem weiteren Flüssigreiniger, insbesondere mit Wasser können auch für Ausführungsformen von Flüssigreiniger-Wechselbehälter, die mit nicht fluiden Flüssigreinigern gefüllt sind, wie Pulver, Granulat, Tabletten oder der gleichen, auch ein Rührwerk vorgesehen sein, um eine möglichst gute Durchmischung und insbesondere Auflösung des primären Flüssigreinigers im zweiten Flüssigreiniger, insbesondere in Wasser, gewährleisten zu können.

Durch das Vorsehen von Rotor-Verriegelungsmittel kann sichergestellt werden, dass der am Abtrieb der Antriebseinheit bzw. am Kupplungselement eingestellte Drehwinkel von außen her unter betriebsüblichen Bedingungen nicht verändert werden kann. Mit einer der Schnittstelle zwischen Flüssigreiniger-Dosiervorrichtung und Antriebseinheit, die durch das Kupplungselement und dem mit ihm beim Wechsel des Flüssigreiniger-Wechselbehälters zu verbindenden Abtriebs- oder Antriebsflansch realisiert ist, je nachdem an welcher Seite das Kupplungselement vorgesehen ist, aufgeprägten Vorzugsorientierung kann sichergestellt werden, dass nur ein Flüssigreiniger-Wechselbehälter in den Getränkemaschine eingewechselt werden kann, dessen Antriebsflansch oder ein daran angeordnetes Kupplungselement exakt die gleiche Drehwinkelausrichtung wie der Abtriebsflansch bzw. das daran angeordnete Kupplungselement aufweist.

Hierdurch ist beispielsweise eine Neuheitsprüfung für einen neu einzusetzenden Flüssigreiniger-Wechselbehälter möglich. Für bereits zuvor, z. B. in dieser Maschine verwendete Flüssigreiniger-Wechselbehälter kann beispielsweise eine Einstellung eines Drehwinkels vorgesehen sein, die sich eindeutig von dem für die Aufnahme eines neu einzusetzenden Flüssigreiniger-Wechselbehälters unterscheidet. Dies kann beispielsweise dadurch geschehen, dass vor einer gegebenenfalls vorgesehenen Signalisierung eines erforderlichen Wechsels der hierfür vorgesehene Drehwinkel und Überwachung einer entsprechenden Kontrolleinheit eingestellt wird.

Beispielsweise kann hierzu der Motor entsprechend angesteuert werden, wobei in vorteilhafter Weise ein Sensor zur Drehwinkel- und/oder Hubpositionserkennung für den Pumpenkolben vorgesehen ist. Bei alternativen Pumpenformen können entsprechend alternative Sensorausführungen zur Anwendung kommen. Beispielsweise kann bei einer Schlauchpumpe ebenfalls die Drehposition des Förderrotors abgefragt werden. Alternativ oder zusätzlich kann auch eine Positionserkennung über die Rotorstellung des Motors realisiert sein, vorzugsweise in Kombination mit einer Erfassung seiner Umdrehungsanzahl, so dass unter Berücksichtung des Übersetzungsverhältnisses wiederum eine exakte Positionsbestimmung des Förderelementes, z. B. des Hubkolbens möglich ist.

In einer möglichen Ausführungsform kann der Sensor als Hall-Sensor ausgebildet sein. Zur Erfassung einer Drehwinkelposition kann z. B. an dem Kupplungselement oder einer anderen geeigneten Stelle ein Magnet angeordnet sein, dessen Magnetfeld zur Ermittlung beispielsweise einer Hubposition und/oder eines Drehwinkels durch den Hall-Sensor detektiert an die Kontrolleinheit übermittelt werden kann.

Durch das Vorsehen mehrerer Einzelmagnete, beispielsweise entlang des Umfangs des Kupplungselementes und/oder entlang dessen Längsachse, ist eine Segmentierung der Drehwinkel und/oder eine Längenunterteilung des Hubweges realisierbar. Hierdurch kann eine weiter verfeinerte Kontrolle der Fördermenge für das zu fördernde Flüssigreiniger und/oder einer durch Förderrichtungsumkehr rückzusaugenden anderen Flüssigkeit, beispielsweise auch zum Zwecke der Selbstreinigung des Flüssigreiniger-Auslasskanals, realisiert werden.

Durch die Anordnung der Flüssigreiniger-Dosiervorrichtung zwischen dem Flüssigreiniger-Wechselbehälter und dem Getränkemaschinen kann eine einfache Kopplung des Auslasses der Dosiereinheit mit den Getränkemaschinen realisiert werden. Dies kann beispielsweise in der Form einer jeweils am Flüssigreiniger-Wechselbehälter und am Getränkemaschinen entsprechend komplementär ausgebildeten Kupplungseinheit realisiert werden. Zur möglichst handhabungsfreundlichen Verbindung können diese beiden Elemente im Wesentlichen starr und vorzugsweise mit Führungskonturen versehen ausgebildet sein. Durch diese zwischenliegende Anordnung ist eine direkte Zudosierung in den Automaten möglich, was insbesondere auch eine exakte Kontrolle über die zugeführte bzw. zuzuführende Menge von Flüssigreiniger ermöglicht.

In weiter vorteilhafter Weise kann durch diese zwischenliegende Anordnung auch ein andernfalls nötiges Ventil, insbesondere am Flüssigreiniger-Wechselbehälter, entbehrlich sei.

In weiter vorteilhafter Weise können Datenkommunikationsmittel vorgesehen sein, durch die beispielsweise eine Erfassung von Patronen spezifischen Daten ermöglicht werden kann. Hierfür können Daten gelesen und/oder gesendet werden. Eine mögliche Technik hierfür stellt die RFID-Technik dar. Denkbar sind aber auch andere, z. B. auf optischer und/oder elektromagnetischer Basis beruhende Informationssysteme.

Die optische Identifikation und/oder Authentifizierung von spezifischen Patronen bzw. des spezifischen Flüssigreinigers in den Patronen könnte z. B. über die Erfassung von speziellen optischen Eigenschaften des Flüssigreinigers erreicht werden. Denkbar wäre die Authentifizierung und/oder Identifizierung über Lichtbrechung oder Lichtstreuung, über Absorption, Emission oder Verstärkung von Licht, über Spektralverschiebung oder Fokussierung von Licht, über Lumineszenz , Fluoreszenz oder anderen optischen Identifikationsmerkmalen in dem Flüssigreiniger.

In einer besonders bevorzugten Weise, könnte der Flüssigreiniger durch die Zumischung eines speziellen Markierungsmittels, z. B. über eine spezielle Pigmentkombination oder ein auf andere Weise optisch wirkendes Mittel oder eine Mittelkombination authentifiziert und/oder identifiziert werden.

In besonders bevorzugter Weise können für die Datenübertragung ohnehin erforderliche energieversorgende Leitungen benutzt werden. Zum Beispiel kann hierdurch auch eine dezentral angeordnete, den Motor überwachende Kontrolleinheit angekoppelt werden. Diese kann beispielsweise als Mikroprozessor auf einer kleinen Platine in der Nähe des Motors, welcher beispielsweise als PWM-gesteuerter Motor realisiert ist, angeordnet werden. Somit sind einerseits nur wenige Leitungen erforderlich und andererseits können diese aufgrund der Nähe der Kontrolleinheit zu den von ihr zu kontrollierenden und/oder sie mit Informationen versorgenden, bzw. von ihr abgegebene Informationen weitergebenden Einheiten (Motor, Sensor, Datenkommunikationselement, Datenspeicher und der gleichen) auch noch sehr kurz gehalten werden.

Durch das Vorsehen eines Flüssigreinigerzulaufs in den Bereich der Getränkemaschine, in welchem das von ihm aufzubereitende Getränk aufbereitet wird, kann der Getränkemaschine gezielt an der Stelle gereinigt werden, an welcher er seine stärkste Verunreinigung erfährt. Insbesondere durch thermische Einwirkungen können sich Inhaltsstoffe der insbesondere durch heißes Wasser aufzubereitenden Getränkebasis an den betreffenden Leitungs- und Kammernoberflächen im Laufe der Zeit niederschlagen und Beschichtungen bis hin zu Verkrustungen ausbilden. Insbesondere betroffen sind hiervon Brühkammern, in denen die Inhaltsstoffe der Getränkebasis aufgeschlossen werden. Um diese möglichst gut ablösen zu können, kann das Flüssigreiniger Fett und/oder Öl und/oder Protein und/oder Polysaccharid lösende Inhaltsstoffe und/oder Entkalkungsmittel umfassen.

Eine Kontrollschaltung die, z. B. nach vorgebbaren Kriterien, automatisch einen Reinigungsvorgang auslöst kann die Anwenderfreundlichkeit einer derartigen Getränkemaschine noch weiter erhöhen. Insbesondere kann hiermit sichergestellt, dass Reinigungsvorgänge beispielsweise in bestimmten Zeitabständen und/oder abhängig von einer bestimmten Anzahl von Getränkezubereitungen durchgeführt werden. Dies hat den Vorteil, dass sich bei der Getränkezubereitung ablagernde Verunreinigungen nur bis zu einem bestimmten Grad anlagern können, so dass deren Abreinigung im Vergleich zu sporadischen Reinigungsvorgängen deutlich rascher und auch gründlicher und/oder mit weniger Flüssigreiniger durchgeführt werden können. Insbesondere bei stark frequentierten Getränkemaschinen wirkt sich dies sowohl hinsichtlich der wieder raschen Verfügbarkeit nach einer vergleichsweise kurzen Reinigungszeit als auch hinsichtlich der Vermeidung starker Ablagerungsschichten aufgrund des hohen Getränkekonsums vorteilhaft aus. Kriterien für die Initiierung eines Reinigungsvorgangs können beispielsweise sein: ein bis mehrmals täglich, nutzungsabhängig - z. B. nach einer bestimmten Anzahl von gebrühten Tassen - und/oder weitere Kriterien.

Eine besonders vorteilhafte Ausführungsform für die Antriebskupplung bildet die Ausgestaltung einer Klauenkupplung.

Eine Klauenkupplung ist konstruktiv einfach und dabei funktionell zuverlässig zu verwirklichen. Die Drehmomentübertragung über eine Klauenkupplung ist darüber hinaus hervorragend, wobei einfacherweise zusätzliche Dämpfungselemente, Rastelemente oder dergleichen vorgesehen werden können.

Weiterhin kann bei Realisierung einer Klauenkupplung auch eine einfache Form der oben angegebenen Erkennung eines neuen Wechselbehälters vorgesehen werden, in dem für den Austausch des Behälters eine vorgegebene Winkelposition des maschinenseitigen Kupplungselementes einerseits und des behälterseitigen Kupplungselementes andererseits vorgesehen wird.

In einer besonderen Ausführungsform der Erfindung wird der Wechselbehälter flexibel ausgebildet. Eine solche "sackartige" Ausgestaltung des Behälters hat den Vorteil, dass sich dieser während der Entleerung zusammenziehen kann, sodass der Behälter in sich geschlossen und ohne Belüftung ausgebildet werden kann.

In einer anderen Ausführungsform der Erfindung wird ein starrer Behälter vorgesehen, der Vorteile in der Handhabung hat und für einen funktionsgerechten Betrieb, z.B. bei Entleerung, mit einer Be- und/oder Entlüftungsöffnung, gegebenenfalls mit einem Be- und/oder Entlüftungsventil versehen ist.

In einer besonderen Ausführungsform der Erfindung wird dieses Ventil so ausgebildet, dass es beim Einsetzen in eine Getränkemaschine geöffnet wird. Hierzu kann beispielsweise das Be-und/oder Entlüftungsventil über einen maschinenseitigen Stößel eingedrückt werden. Der Ventilkörper kann dabei durch ein Kraftelement, beispielsweise eine Feder, in seiner geschlossenen Position bei abgenommenem Behälter gehalten werden.

Vorteilhafterweise wird zudem am Auslass des Behälters ein Ventil vorgesehen, dass den Wechselbehälter abdichtet. In einer besonderen Ausführungsform der Erfindung wird dieses Ventil so ausgebildet, dass es beim Einsetzen in eine Getränkemaschine geöffnet wird. Hierzu kann beispielsweise ein Ventilkörper über einen maschinenseitigen Stößel eingedrückt werden. Der Ventilkörper kann dabei durch ein Kraftelement, beispielsweise eine Feder in seiner geschlossenen Position bei abgenommenem Behälter gehalten werden.

Weiterhin kann ein Überdruck im Wechselbehälter vorgesehen werden, um die Dichtigkeit des Auslassventils zu verbessern. Ein solcher Überdruck kann dabei ohne weiteres auch mit einem Kraftelement kombiniert vorgesehen werden, sodass eine mehrfache Einwirkung in die geschlossene Stellung des Ventilkörpers vorhanden ist.

Bei einer einführungsgemäßen Getränkemaschine kann vorteilhafterweise auch eine elektronische Codierung, beispielsweise über ein so genanntes RFID-Element vorgenommen werden, um eine Identifizierung des Wechselbehälters durch die Getränkemaschine zu ermöglichen. Gegebenenfalls kann der Betrieb der Getränkemaschine vom Vorhandensein eines korrekten Wechselbehälters abhängig gemacht werden.

In einer besonderen Ausführungsform ist die Getränkemaschine als Kaffeeautomat ausgebildet, insbesondere als Kaffeevollautomat wie sie z. B. in Büro-Kaffeeküchen häufig anzufinden sind.

Gemäß eines zweiten Aspektes betrifft die vorliegende Erfindung ein Flüssigreiniger-Wechselbehälter, das sich dadurch auszeichnet, dass es zur Verwendung in einer Getränkemaschine vorgesehen ist, wie er oben beschrieben ist. Ausführungsbeispiel:

Nachfolgend wird unter Bezugnahme auf die beigefügten Figuren rein beispielhaft und schematisch eine mögliche Ausführungsform einer erfindungsgemäßen Getränkemaschine und eines als Wechselelement ausgebildeten Flüssigreiniger-Wechselbehälter näher beschrieben.

Demnach zeigen
- Figur 1: einen Getränkemaschine 1 mit einer Reinigungsvorrichtung 2,
- Figur 2: eine Draufsicht auf eine freigestellte Dosiereinheit mit angekoppelter Antriebseinheit,
- Figur 3: eine Dosiereinheit mit Kupplung in Explosionsdarstellung,
- Figur 4: eine Draufsicht auf eine Antriebseinheit mit Kupplung,
- Figur 5: eine Draufsicht auf einen Aufnahmeschacht für ein Flüssigreiniger-Wechselbehälter mit darin angeordneter Kupplung und einem Flüssigreiniger-Anschluss und
- Figur 6: eine Draufsicht auf einen Flüssigreiniger-Wechselbehälter von unten mit daran ausgebildeten, zur Figur 4 komplementären Anschlüssen für einen Antrieb einer Flüssigreiniger-Fördervorrichtung und einen Flüssigreiniger-Auslass.

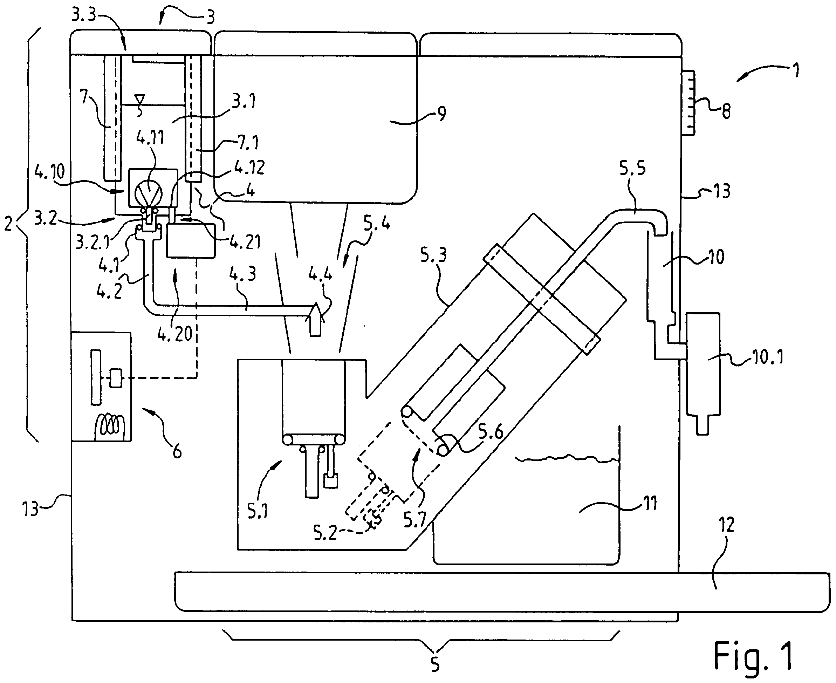

Als eine bevorzugte Ausführungsform einer Getränkemaschine ist in der Figur 1 rein beispielhaft und ohne einschränkende Intention ein Kaffeevollautomat dargestellt. Dieser weist gemäß des gezeigten Ausführungsbeispiels einen Flüssigreiniger-Wechselbehälter 3 für das Flüssigreiniger 3.1, z. B. sowie im Weiteren eine Flüssigreiniger-Dosiervorrichtung 4 auf.

Die Flüssigreiniger-Dosiervorrichtung 4 ist derart vorgesehen, dass erste Teile 4.10 mit dem Flüssigreiniger-Wechselbehälter 3 austauschbar ausgebildet sind. Diese umfassen z. B. eine Dosierpumpe 4.11. Diese kann in einer bevorzugten Ausführungsform als Hubkolbenpumpe oder anderweitig, zum Beispiel auch in Form einer Schlauchpumpe ausgebildet sein.

Ein weiterer Teil 4.20 der Flüssigreiniger-Dosiervorrichtung 4 ist in der Getränkemaschine, hier im Kaffeevollautomaten, so angeordnet, dass bei Einsetzen des als Wechselbehälters 3 in einen entsprechenden Aufnahmeschacht der Flüssigreiniger-Auslass 3.2 und ein Antriebseingang 4.12 mit den entsprechend komplementären, am Kaffeevollautomaten 1 ausgebildeten Anschlüssen 4.1 und 4.21 wirkungsgemäß zusammengefügt werden und so eine Leitungskupplung für die Leitung des Flüssigreinigers, bilden.

Zum Anschluss des pumpenseitigen Antriebseingangs 4.12 ist eine mechanische, Antriebskupplung 4.21 vorgesehen, die an einem Abtrieb einer Antriebseinheit 4.22 angeordnet ist. Sie dient als Kupplungsstelle zwischen den beiden Teilen 4.10 und 4.20 der Flüssigreinigerdosiervorrichtung 4.

Mittels der Komponenten 4.1 bis 4.4 kann das Flüssigreiniger vom Pumpenanschluss 3.2 bis zur Zugabestelle 4.4 zur Reinigung einer Brüheinheit 5 mit der entsprechenden Fördermenge fördern. Hierbei sind, ausgehend vom Flüssigreiniger-Auslass 3.2 ein geräteseitiger Flüssigreinigeranschluss 4.1, eine Flüssigreinigerzuführleitung 4.2, ein Flüssigreinigerzulauf 4.3 und beispielhaft ein Flüssigreinigerabgabeelement 4.4 dargestellt.

Am behälterseitigen Anschluss 3.2 und/oder am geräteseitigen Anschluss 4.1 kann in weiter vorteilhafter Weise ein Ventil vorgesehen sein. Rein beispielhaft ist hierfür die Position 3.2.1 dargestellt. Insbesondere vorteilhaft kann dieses jeweils beim Kontakt mit dem komplementären Anschlusselement geöffnet werden, um so einerseits ein Auslaufen des Flüssigreinigers aus dem Tank und andererseits eine gegebenenfalls mögliche Verunreinigung und/oder einen Lufteinschluss in die Pumpenzulaufleitung zu verhindern. Grundsätzlich könnte ein solches aber auch entbehrlich sein, da die Pumpe direkt vor dem Auslass 3.2 im Behälter 3 angeordnet ist und diesen abdichten kann.

Um einen Druckausgleich im Behälter, hier in Form einer beispielhaften Reinigungskartusche 3, zur ordnungsgemäßen Entnahme des Flüssigreinigers zu ermöglichen, ist dieser mit einer Entlüftung 3.3 versehen. Diese kann insbesondere vorteilhaft ebenfalls ein Ventil aufweisen kann, um zum Beispiel ein Auslaufen der Reinigungsflüssigkeit zu verhindern.

Zur Vermeidung von Verwechslungen kann der Tank bzw. die Austausch-Reinigungskartusche eine von üblicherweise ebenfalls von solchen Kaffeevollautomaten verwendeten Trinkwasseraufbereitungspatronen verschiedene Kontur aufweisen, zum Beispiel eine quaderförmige. Damit sind Verwechslungen zwischen einer Wasseraufbereitungs-Filterkartusche und einer solchen Reinigungsmedium-Wechselkartusche bei ein und derselben Maschine ausgeschlossen.

Um einen automatischen Ablauf eines Reinigungsvorgangs zu ermöglichen, kann eine Kontrolleinheit 6 vorgesehen sein. In vorteilhafter Weise kann hierfür die Kontrolleinheit genutzt werden, die zum grundsätzlichen Betrieb des Kaffeevollautomaten vorgesehen ist. Denkbar ist aber auch eine separate.

Der Füllstand des Behälters 3 für den Flüssigreiniger kann mittels eines Füllstandssensors 7 erfasst werden. Dieser kann zum Beispiel in der Form eines Infrarotsensors ausgebildet sein. Die entsprechende Infrarot-Lichtquelle 7.1 ist hier beispielhaft auf der gegenüber liegenden Seite des als Wechselkartusche ausgebildeten Tanks angeordnet. Die Positionierung dieser Sensorelemente kann z. B. in Führungen und/oder Halterungen für die Kartusche 3 vorgesehen sein. Zur Fixierung der Kartusche können Schiebe-, Steck-, Klapp-, Rastverbindungen oder dergleichen vorgesehen sein um den Behälter geschützt ins Maschinengehäuse zu integrieren.

Mittels einer Füllstandsanzeige 8 kann der Füllstand des Flüssigreinigers angezeigt werden, zum Beispiel in entsprechender Verhältnisanzeige und/oder durch ein Signalelement, das bei ausreichender Befüllung ein entsprechendes Signal abgibt und bei bevorstehender und/oder bereits eingetretener Entleerung ein entsprechendes Warnsignal abgibt, z. B. akustisch und/oder optisch.

Die Elemente der Brüheinheit sind, hier wiederum beispielhaft, eine Brühkammer 5.1, die hier zum Beispiel schwenkbar ausgebildet ist, ein Betriebswasseranschluss 5.2 und ein diese aufnehmendes Gehäuse 5.3 sowie ein darin ausgebildeter Einlass 5.4, durch welchen das von der Kaffeemühle abgegebene Kaffeepulver aufgenommen werden kann. Über die Brüheinheit-Auslassleitung 5.5 wird der aufgebrühte Kaffee einer Kaffeeleitung 10 und dem Kaffeeauslass 10.1 zugeführt. Die Förderung des Kaffees kann z. B. mittels eines beweglichen Kolbens 5.6 erfolgen. Zum Rückhalt des Tresters kann ein Sieb 7.7 vorgesehen sein.

Weitere hier beispielhaft im Gehäuse 13 des Kaffeevollautomaten noch angeordnete Komponenten sind eine Tresterschale 11 und eine Tropfschale 12.

Die Reinigung des Kaffeevollautomaten, insbesondere der Brühkammer, erfolgt somit entsprechend eines nach Betriebsdauer und/oder Anzahl erfolgter Brühungen generiertem Signal, indem Reinigungsmedium mittels der vorgesehenen Komponenten 3 bis 4.4 in den Einlasstrichter 5.4 der Brüheinheit eindosiert werden, um deren Komponenten zu reinigen. Vorzugsweise erfolgt dies durch Zugabe von Wasser, vorzugsweise erhitztem Wasser und/oder Wasserdampf, um die von dem zuvor aufbereiteten Kaffeepulver darin befindlichen Rückstände zu lösen und so den Kaffeevollautomat für die Entnahme des nächsten Kaffees zu reinigen.

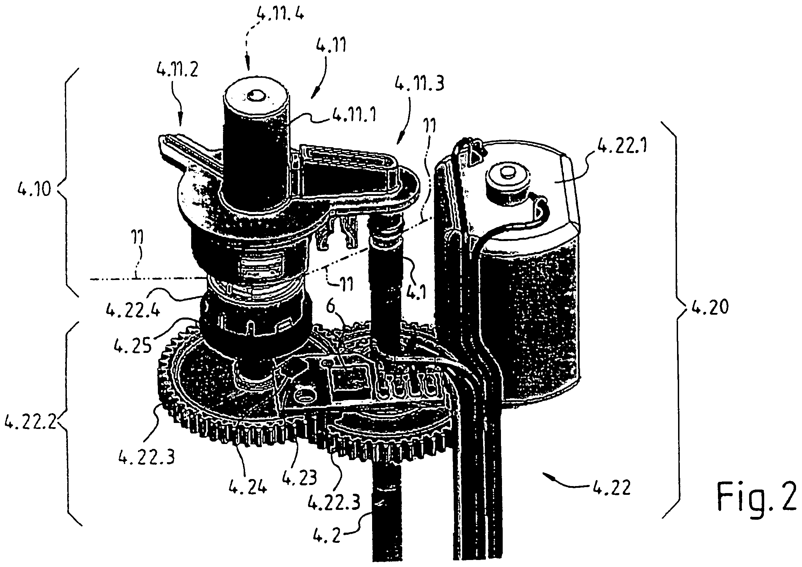

Die Figur 2 zeigt die beiden Teile 4.10 und 4.20 der Flüssigreiniger-Dosiervorrichtung 4 in freigestellter Darstellung. Die strichpunktierte Linie 11 stellt die Trennlinie bzw. die Schnittstelle zwischen diesen beiden Hauptkomponenten und damit auch zwischen Behälter und Gerät dar.

Ein Herzstück der mit dem Flüssigreiniger-Wechselbehälter 3 austauschbaren Teile 4.10 der Flüssigreiniger-Dosiervorrichtung 4 stellt das Flüssigreiniger-Fördermittel, hier beispielhaft in der Form einer Hubkolbenpumpe 4.11 dargestellt, dar. Diese umfasst ein Gehäuse 4.11.1, einen Flüssigreinigerzulauf 4.11.2 und einen Flüssigreinigerablauf 4.11.3. Im Inneren der Dreh-Hubkolbenpumpe ist ein sowohl rotatorisch als auch axial beweglich ausgebildetes Dosierelement in der Form eines Dreh-Hubkolbens 4.11.4 angeordnet (hier nicht sichtbar und daher mit gestricheltem Pfeil angedeutet).

Die geräteseitigen Teile 4.20 der Flüssigreiniger-Dosiervorrichtung 4 umfassen eine Antriebseinheit 4.22 zur Bereitstellung einer die Dosierpumpe antreibenden Antriebsbewegung. Dies geschieht über eine Drehbewegung, die den Dreh-Hubkolben 4.11.4 mittels eines Motors 4.22.1 unter Zwischenschaltung von Übersetzungsmitteln, hier in der Form eines Zahnradgetriebes 4.22.2 mit Zahnrädern 4.22.3, und einer Kupplung 4.22.4 antreibt.

Auf einer Platine 4.23 ist eine Kontrolleinheit 6 angeordnet, z. B. in der Form eines Mikroprozessors, hier beispielhaft in der Antriebseinheit 4.22 integriert. Sie kann die Flüssigreiniger-Dosiervorrichtung 4 entsprechend überwachen. Dass heißt sie steuert bzw. regelt den Motor 4.22.1 unter Rückmeldung einer Dreh- und/oder Hubposition des Dreh-Hubkolbens. Hierfür erhält sie die entsprechenden Informationen über einen Hall-Sensor 4.24, der entsprechende Positionsinformationen aus einem an der Kupplung 4.22.4 angeordneten Magneten 4.25 stammenden Magnetfeld bezieht.

In der hier dargestellten Ausführungsform ist der Magnet als die Kupplung umfassender Magnetring realisiert, mittels welchem der Hall-Sensor axiale Positionen des damit angetriebenen Dreh-Hubkolbens erfassen kann. Unter Kenntnis der Kontur einer die Bewegung des Dreh-Hubkolbens steuernden Kulissenführung im Inneren der Pumpe kann hiermit gleichzeitig auch eine entsprechende Winkelposition des Dreh-Hubkolbens ermittelt werden, und damit auch eine Aussage über die hierdurch zu fördernde Fördermenge an Flüssigreiniger. Gegebenenfalls kann hierfür zusätzlich auch eine Umdrehungszahl des Motorenrotors herangezogen werden, welche unter Berücksichtigung des Übersetzungsverhältnisses der Zahnräder ebenfalls eine Drehwinkelbestimmung des Dreh-Hubkolbens ermöglichen können.

Zur elektrischen Versorgung für Energie und Daten sind Leitungen 4.26 dargestellt.

Der von der Pumpe in das Gerät zu dosierende Flüssigreiniger wird an der Schnittstelle zwischen Flüssigreiniger-Wechselbehälter und Getränkemaschine vom Flüssigreinigerablauf 4.11.3 in den geräteseitigen Flüssigreinigeranschluss 4.1 und weiter in die Flüssigreinigerzufuhrleitung 4.2 gefördert, um schlussendlich über den Flüssigreinigerzulauf 4.3 gemäß der Darstellung in der Figur 1 in die zu reinigende Getränkeaufbereitungseinheit eingebracht zu werden.

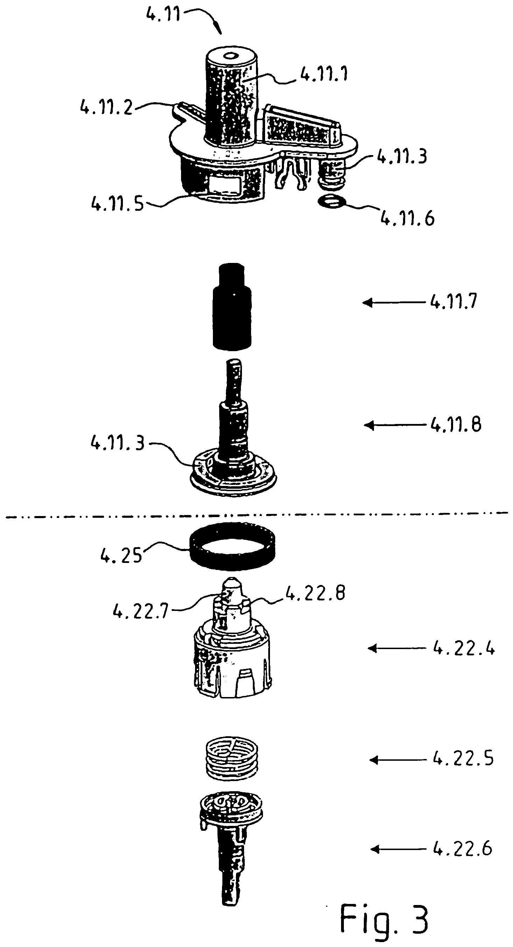

In der Figur 3 sind in explosionsartig auseinandergezogener Darstellung entlang der Längsachse der Pumpe 4.11 Elemente der Pumpe und der Kupplung 4.22.4 detaillierter gezeigt. Im unteren Bereich des Gehäuses 4.11.1 ist eine fensterförmige Ausnehmung als Fixiermittel 4.11.5 zum Eingriff in ein komplementäres Element dargestellt. Am Flüssigreinigerablauf 4.11.3 ist beispielhaft eine Dichtung 4.11.6 eingezeichnet. Axial unter dem Gehäuse ist der Pumpenkolben 4.11.7 der Dreh-Hubkolbenpumpe 4.11 dargestellt. Im zusammengebauten Zustand ist er über die Antriebsachse 4.11.8 gesteckt, an welcher eine Kulisse 4.11.9 zur Steuerung der Drehwinkel abhängige Hubbewegung des Dreh-Hubkolbens vorgesehen ist. Sie kann beispielsweise an einer im Inneren des Pumpengehäuses ausgebildeten, komplementären Nocke entlangfahren und unter Beaufschlagung einer Federkraft in Längsrichtung der Antriebsachse 4.11.8 über eine Umlaufumdrehung gesehen eine oszillierende Hubbewegung durchführen.

Die Federkraft stammt in diesem Ausführungsbeispiel von dem hier beispielhaft als Spiralfeder dargestellten Federelement 4.22.5 der Kupplung 4.22.4. Diese Feder dient als elastische, drehmomentübertragende Verbindung zwischen dem mit dem Getriebe 4.22.2 verbundenen Abtrieb 4.22.6 und der Kupplung 4.22.4. Hierdurch kann die Kupplung sowohl gegenüber der Achse verschwenkbar als auch radial und axial positionsvariabel realisiert werden und somit sowohl Fertigungstoleranzen ausgleichen als auch beim Einführen eins auszutauschenden Flüssigreiniger-Behältnisses eine leichtere Kopplung mit den gehäuseseitigen Anschlusskomponenten ermöglichen.

Eine weitere Erleichterung hierfür stellen ein stirnseitig der Kupplung ausgebildeter Zentrierzapfen 4.22.7 und abgerundete Konturen von Mitnahmezähnen 4.22.8 dar.

Der Magnetring 4.25 wird mittels eines federelastisch ausgebildeten Haltelementes 4.27 an der Kupplung positionsfest gehalten.

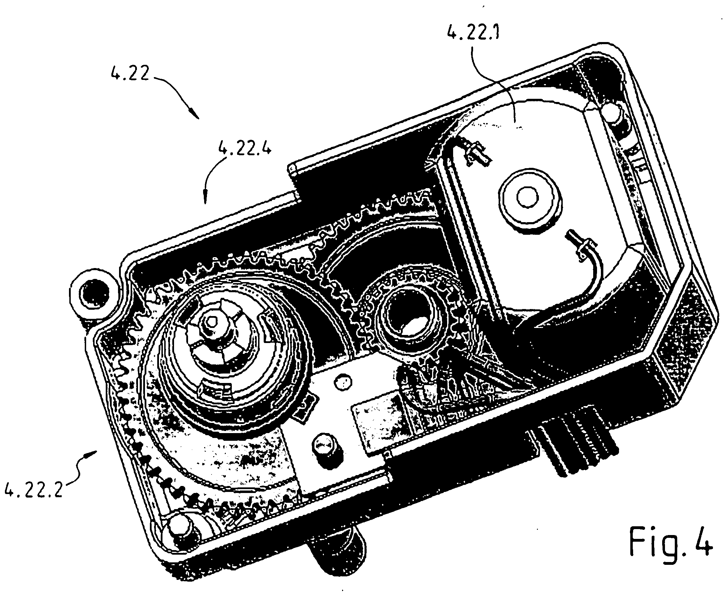

Die Figur 4 zeigt eine Draufsicht auf die Antriebseinheit 4.22 mit geöffnetem Gehäuse. Hierin sind die wesentlichen Komponenten, der Motor 4.22.1, das Getriebe 4.22.2 und die zur Übertragung der Drehbewegung auf die aufzusteckende Dreh-Hubkolbenpumpe vorgesehene Kupplung 4.22.4 gezeigt.

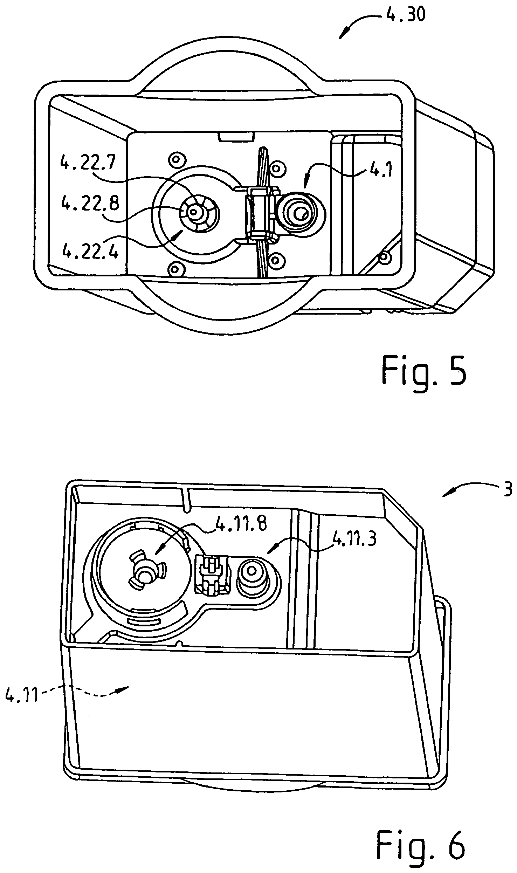

Die Figur 5 zeigt einen geräteseitig vorgesehenen, so genannten "Aufnahmeschacht" 4.30 für ein darin als Wechselbehältnis einzusetzendes Flüssigreiniger-Wechselbehälter 3 gemäß der Darstellung in der Figur 6. Im Inneren des Aufnahmeschachtes sind die Kupplung 4.22.4 und der an ihr stirnseitig ausgebilete Zentrierzapfen 4.22.7 sowie die diese umgebenden Mitnahmezähen 4.22.8 als drehmomentübertragende Einheit für die damit anzutreibende Dreh-Hubkolbenpumpe zu erkennen. Diese ist ihrerseits wiederum als mit dem Flüssigreiniger-Wechselbehälter austauschbarer Teil 4.11 im Behältnisgehäuse untergebracht.

Im eingesteckten Zustand des Wechselbehältnisses 3 greifen sowohl die mechanischen zum Antrieb der Dreh-Hubkolbenpumpe vorgesehene Komponenten als auch die Flüssigreiniger leitenden Verbindungen 4.1 und 4.11.3 ineinander. Um z. B. bei entferntem Wechselbehältnis 3 eine bleibende Verdrehung der Winkelposition der Antriebszähne zuverlässig zu verhindern können im Weiteren auch Rotor-Verriegelungsmittel vorgesehen sein. Diese können beispielsweise durch eine entsprechende Ansteuerung des Motors 4.22.1 dahingehend erreicht werden, dass dieser sich nicht bewegt und damit über das an ihn angeschlossene Getriebe auch keine Winkelpositionsänderung seines Abtriebs möglich ist. Eine weitere Möglichkeit besteht darin, dass über das Federelement 4.22.5 eine derartige Drehmomententkupplung bewirkt wird, dass bei gegebenenfalls erfolgter Verdrehung der Kupplungsorientierung nach deren Freigabe diese wieder ihre ursprüngliche Position einnimmt.

### Bezugszeichenliste:

- 1: Getränkemaschine/Kaffeevollautomat
- 2: Reinigungsvorrichtung
- 3: Flüssigreiniger-Wechselbehälter 3
- 4: Flüssigreiniger-Dosiervorrichtung 4
- 5: Brüheinheit
- 6: Kontrolleinheit
- 7: Füllstandssensor
- 8: Füllstandsanzeige
- 10: Kaffeeleitung
- 11: Tresterschale
- 12: Tropfschale
- 13: Gehäuse

- 3.1: Flüssigreiniger
- 3.2: Flüssigreiniger-Auslass
- 3.3: Entlüftung
- 4.1: Flüssigreinigeranschluss
- 4.2: Flüssigreinigerzufuhrleitung
- 4.3: Flüssigreinigerzulauf
- 4.4: Dosierabgabeelement
- 4.10: Teil
- 4.11: Dosiereinheit/Hubkolbenpumpe
- 4.11.1: Gehäuse
- 4.11.2: Flüssigreinigerzulauf
- 4.11.3: Flüssigreinigerablauf
- 4.11.4: Dreh-Hubkolben
- 4.11.5: Fixiermittel
- 4.11.6: Dichtung
- 4.11.7: Pumpenkolben
- 4.11.8: Antriebsachse
- 4.11.9: Kulisse
- 4.12: Antriebseingang
- 4.20: Teil
- 4.21: Kupplung
- 4.22: Antriebseinheit
- 4.22.1: Motor
- 4.22.2: Zahnradgetriebe
- 4.22.3: Zahnräder
- 4.22.4: Kupplung
- 4.22.5: Federelement
- 4.22.6: Abtrieb
- 4.22.7: Zentrierzapfen
- 4.22.8: Mitnahmezähnen
- 4.24: Hall-Sensor
- 4.25: Magneten
- 4.26: Leitungen
- 4.27: Halteelement
- 5.1: Brühkammer
- 5.2: Betriebswasseranschluss
- 5.3: Gehäuse
- 5.4: Einlass
- 5.5: Brüheinheit-Auslassleitung
- 5.6: beweglicher Kolben
- 7.1: Infrarot-Lichtquelle
- 7.7: Sieb
- 10.1: Kaffeeauslass

## Patentansprüche

1. Getränkemaschine (1) mit einem Flüssigreiniger-Behälter (3), in dem Flüssigreiniger (3.1) für mehrere Reinigungsvorgänge bevorratbar ist, und mit einer Dosiervorrichtung (4), die eine Dosierpumpe (4.11) zur Dosierung von Flüssigreiniger (3.1) aufweist, wobei der Flüssigreiniger-Behälter (3) als Wechselbehälter ausgebildet ist, der wenigstens Teile der Dosierpumpe sowie eine Leitungskupplung (4.11.3; 4.1) zwischen dem Wechselbehälter und der Getränkemaschine zur Ankupplung einer Flüssigreinigerleitung (4.11.3) an die Getränkemaschine und eine Antriebskupplung (4.22.4; 4.11.8) zur mechanischen Ankupplung eines Antriebs (4.22) der Dosierpumpe (4.11) aufweist, **dadurch gekennzeichnet, dass** die Dosierpumpe (4.11) einen Rotor umfasst und dass die Antriebswelle eines mit dem Rotor zu kuppelnden Antriebsmotors (4.22.1) gegenüber der Achse der Antriebskupplung (4.22.4; 4.11.8) versetzt angeordnet ist.

2. Getränkemaschine nach Anspruch 1 **dadurch gekennzeichnet, dass** die erste Kupplung (4.11.3; 4.1) während des Betriebs der Dosierpumpe (4.11) feststehend ausgebildet ist.

3. Getränkemaschine nach einem der vorgenannten Ansprüche **dadurch gekennzeichnet, dass** die Dosierpumpe (4.11) einen Rotor umfasst und dass die Antriebswelle eines mit dem Rotor zu kuppelnden Antriebsmotors (4.22.1) gegenüber der Achse des Rotors oder der Achse der Antriebskupplung (4.22.4; 4.11.8) versetzt und gewinkelt angeordnet ist.

4. Getränkemaschine nach einem der vorgenannten Ansprüche **dadurch gekennzeichnet, dass** der Flüssigreinigerausgang (4.11.3) der Dosierpumpe (4.11) gegenüber der Achse des Pumpenrotors versetzt angeordnet ist.

5. Getränkemaschine nach einem der vorgenannten Ansprüche **dadurch gekennzeichnet, dass** wenigstens ein Getriebeelement (4.22.2) zur Überbrückung eines Versatzes und/oder eines Winkels und/oder zur Über- oder Untersetzung des Drehmomentes des Antriebsmotors (4.22.1) zwischen dem Rotor oder der Antriebskupplung (4.22.4; 4.11.8) und dem Antriebsmotor vorgesehen ist.

6. Getränkemaschine nach einer der vorgenannten Ansprüche, **dadurch gekennzeichnet, dass** eine feststehende Flüssigkeitsleitung (4.1) koaxial zu einem rotierenden Antriebs- oder Getriebeelement (4.22.3) angeordnet ist.

7. Getränkemaschine nach einem der vorgenannten Ansprüche **dadurch gekennzeichnet, dass** die Dosiereinheit (4.11) ein sowohl rotatorisch als auch axial beweglich ausgebildetes Dosierelement (4.11.4) aufweist.

8. Getränkemaschine nach einem der vorangehenden Ansprüche, **dadurch gekennzeichnet, dass** Rotor-Positionserkennungsmittel (4.24) vorgesehen sind.

9. Getränkemaschine nach einem der vorangehenden Ansprüche, **dadurch gekennzeichnet, dass** Rotor-Verriegelungsmittel (4.22.1) vorgesehen sind.

10. Getränkemaschine nach einem der vorangehenden Ansprüche, **dadurch gekennzeichnet, dass** Fördermengenkontrollmittel (6) und/oder Förderrichtungsumkehrmittel (6) vorgesehen sind.

11. Getränkemaschine nach einem der vorangehenden Ansprüche, **dadurch gekennzeichnet, dass** Mischmittel (4.11.3) vorgesehen sind.

12. Getränkemaschine nach einem der vorangehenden Ansprüche, **dadurch gekennzeichnet, dass** Datenkommunikationsmittel (4.24) vorgesehen sind.

13. Getränkemaschine nach einem der vorangehenden Ansprüche, **dadurch gekennzeichnet, dass** ein Flüssigreinigerzulauf (4.3) in eine Brühkammer vorgesehen ist.

14. Gatränkemaschine nach einem der vorangehenden Ansprüche, **dadurch gekennzeichnet, dass** ein Fett und/oder Öl und/oder Protein und/oder Polysaccharid lösendes Flüssigreiniger (3.1) vorgesehen ist, und/oder dass der Flüssigreiniger ein Entkalkungsmittel umfasst.

15. Getränkemaschine nach einem der vorgenannten Ansprüche **dadurch gekennzeichnet, dass** die Antriebskupplung (4.22.4; 4.11.8) als Klauenkupplung ausgebildet ist.

16. Getränkemaschine nach einem der vorgenannten Ansprüche **dadurch gekennzeichnet, dass** der Behälter (3) flexibel ausgebildet ist.

17. Getränkemaschine nach einem der vorgenannten Ansprüche 1 bis 15, **dadurch gekennzeichnet, dass** der Wechselbehälter (3) als starrer Behälter vorgesehen ist, der eine Be- und/oder Entlüftungsöffnung (3.3) oder ein Be- und/oder Entlüftungsventil umfasst.

18. Getränkemaschine nach einem der vorgenannten Ansprüche **dadurch gekennzeichnet, dass** ein Auslassventil am Wechselbehälter (3) vorgesehen ist.

19. Getränkemaschine nach einem der vorgenannten Ansprüche **dadurch gekennzeichnet, dass** optische Identifikations- und/oder Authentifizierungsmittel, z. B. Farb- und/oder Leuchtmarker, Lumineszenz- und/oder Fluoreszenzmarker, Lichtbrechungs-, Streuungs-, Fokussierungs-, Absorptions-, Emissions- oder Spektralverschiebungsmittel vorgesehen sind.

20. Flüssigkeitsreiniger-Wechselbehälter (3) mit Flüssigreiniger (3.1), **dadurch gekennzeichnet, dass** er zur Verwendung in einer Getränkemaschine (1) nach einem der vorgenannten Ansprüche eine wenigstens teilweise innerhalb eines zur Aufnahme des Flüssigreinigers vorgesehenen Flüssigkeitsbehälters des Flüssigreiniger-Wechselbehälters (3) integrierte Dosierpumpe (4.11) sowie ein Leitungskupplungselement (4.11.3) für eine Leitungskupplung einer Flüssigreinigerleitung und ein Antriebskupplungselement (4.11.8) zur mechanischen Kupplung eines Antriebs der Dosierpumpe aufweist.

## Claims

1. A beverage machine (1) having a liquid cleaner container (3) in which liquid cleaner (3.1) can be stored for a plurality of cleaning operations, and having a dispensing device (4) having a dispensing pump (4.11) for dispensing liquid cleaner (3.1), wherein the liquid cleaner container (3) is designed as an interchangeable container, which has at least parts of the dispensing pump and a line coupling (4.11.3, 4.1) between the interchangeable container and the beverage machine for coupling a liquid cleaner line (4.11.3) to the beverage machine and a drive coupling (4.22.4, 4.11.8) for the mechanical coupling of a drive (4.22) of the dispensing pump (4.11), **characterised in that** the dispensing pump (4.11) comprises a rotor and that the drive shaft of a drive motor (4.22.1) to be coupled to the rotor is arranged to be offset with respect to the axis of the drive coupling (4.22.4; 4.11.8).

2. The beverage machine according to claim 1, **characterised in that** the first coupling (4.11.3; 4.1) is designed to be stationary during the operation of the dispensing pump (4.11).

3. The beverage machine according to one of the preceding claims, **characterised in that** the dispensing pump (4.11) comprises a rotor and that the drive shaft of a drive motor (4.22.1) to be coupled to the rotor is arranged to be offset and at an angle relative to the axis of the rotor or to the axis of the drive coupling (4.22.4; 4.11.8).

4. The beverage machine according to one of the preceding claims, **characterised in that** the liquid cleaner outlet (4.11.3) of the dispensing pump (4.11) is arranged to be offset relative to the axis of the pump rotor.

5. The beverage machine according to one of the preceding claims, **characterised in that** at least one transmission element (4.22.2) is provided for bridging an offset and/or an angle and/or for increasing or decreasing the torque of the drive motor (4.22.1) between the rotor or the drive coupling (4.22.4, 4.11.8) and the drive motor.

6. The beverage machine according to one of the preceding claims, **characterised in that** a stationary liquid line (4.1) is arranged to be coaxial to a rotating drive or transmission element (4.22.3).

7. The beverage machine according to one of the preceding claims, **characterised in that** the dispensing unit (4.11) has a dispensing element (4.11.4) designed to be both rotationally and axially movable.

8. The beverage machine according to one of the preceding claims, **characterised in that** rotor position detecting means (4.24) are provided.

9. The beverage machine according to one of the preceding claims, **characterised in that** rotor locking means (4.22.1) are provided.

10. The beverage machine according to one of the preceding claims, **characterised in that** flow rate control means (6) and/or flow direction reversing means (6) are provided.

11. The beverage machine according to one of the preceding claims, **characterised in that** mixing means (4.11.3) are provided.

12. The beverage machine according to one of the preceding claims, **characterised in that** data communication means (4.24) are provided.

13. The beverage machine according to one of the preceding claims, **characterised in that** a liquid cleaner feed line (4.3) is provided in a brewing chamber.

14. The beverage machine according to one of the preceding claims, **characterised in that** a fat and/or oil and/or protein and/or polysaccharide dissolving liquid cleaner (3.1) is provided, and/or that the liquid cleaner comprises a decalcifying agent.

15. The beverage machine according to one of the preceding claims, **characterised in that** the drive coupling (4.22.4; 4.11.8) is designed as a jaw coupling.

16. The beverage machine according to one of the preceding claims, **characterised in that** the container (3) is designed to be flexible.

17. The beverage machine according to one of the preceding claims 1 to 15, **characterised in that** the interchangeable container (3) is provided as a rigid container which comprises a ventilation and/or exhaust opening (3.3) or a ventilation and/or exhaust valve.

18. The beverage machine according to one of the preceding claims, **characterised in that** an outlet valve is provided on the interchangeable container (3).

19. The beverage machine according to one of the preceding claims, **characterised in that** optical identification and/or authentication means, e.g. coloured markers and/or highlighters, luminescence and/or fluorescence markers, refraction, scattering, focusing, absorption, emission, or spectral shift means are provided.

20. A liquid cleaner interchangeable container (3) with liquid cleaner (3.1), **characterised in that** for use in a beverage machine (1) according to one of the preceding claims the liquid cleaner interchangeable container has an integrated dispensing pump (4.11) at least partially within a liquid container of the liquid cleaner interchangeable container (3) provided for receiving the liquid cleaner and a line coupling element (4.11.3) for a line coupling of a liquid cleaner line and a drive coupling element (4.11.8) for the mechanical coupling of a drive of the dispensing pump.

## Revendications

1. Distributeur de boisson (1) comportant un récipient de détergent liquide (3) dans lequel un détergent liquide (3.1) peut être stocké pour plusieurs opérations de nettoyage, et comportant un dispositif de dosage (4) comportant une pompe doseuse (4.11) pour doser le détergent liquide (3.1), le récipient de détergent liquide (3) étant conçu comme un récipient interchangeable et comportant au moins des parties de la pompe doseuse et un raccord de conduite (4.11.3 ; 4.1) entre le récipient interchangeable et le distributeur de boisson afin de coupler une conduite de détergent liquide (4.11.3) au distributeur de boisson et un raccord de transmission (4.22. 4 ; 4.11.8) pour le couplage mécanique d'un entraînement (4.22) de la pompe doseuse (4.11), **caractérisé en ce que** la pompe doseuse (4.11) comprend un rotor et **en ce que** l'arbre d'entraînement d'un moteur d'entraînement (4.22.1) à coupler au rotor est disposé décalé par rapport à l'axe du raccord de transmission (4.22.4; 4.11.8).

2. Distributeur de boisson selon la revendication 1, **caractérisé en ce que** le premier raccord (4.11.3 ; 4.1) est conçu pour être immobile pendant le fonctionnement de la pompe doseuse (4.11).

3. Distributeur de boisson selon l'une quelconque des revendications précédentes, **caractérisé en ce que** la pompe doseuse (4.11) comprend un rotor et **en ce que** l'arbre d'entraînement d'un moteur d'entraînement (4.22.1) à coupler au rotor est disposé décalé et en biais par rapport à l'axe du rotor ou à l'axe du raccord de transmission (4.22.4 ; .4.11.8).

4. Distributeur de boisson selon l'une quelconque des revendications précédentes, **caractérisé en ce que** la sortie du détergent liquide (4.11.3) de la pompe doseuse (4.11) est décalée par rapport à l'axe du rotor de la pompe.

5. Distributeur de boisson selon l'une quelconque des revendications précédentes, **caractérisé en ce qu'**au moins un élément de transmission (4.22.2) est prévu pour combler un décalage et/ou un angle et/ou pour augmenter ou réduire le couple du moteur d'entraînement (4.22.1) entre le rotor ou le raccord de transmission. (4.22.4 ; 4.11.8) et le moteur d'entraînement.

6. Distributeur de boisson selon l'une quelconque des revendications précédentes, **caractérisé en ce qu'**une conduite de liquide fixe (4.1) est agencée coaxialement à un élément d'entraînement ou de transmission en rotation (4.22.3).

7. Distributeur de boisson selon l'une quelconque des revendications précédentes, **caractérisé en ce que** l'unité de dosage (4.11) présente un élément de dosage (4.11.4) conçu à la fois pour la rotation et pour la translation axiale.

8. Distributeur de boisson selon l'une quelconque des revendications précédentes, **caractérisé en ce que** des moyens d'identification de la position du rotor (4.24) sont prévus.

9. Distributeur de boisson selon l'une quelconque des revendications précédentes, **caractérisé en ce que** des moyens de verrouillage du rotor (4.22.1) sont prévus.

10. Distributeur de boisson selon l'une quelconque des revendications précédentes, **caractérisé en ce que** des moyen de contrôle de quantité acheminée (6) et/ou des moyens d'inversion de direction d'acheminement (6) sont prévus.

11. Distributeur de boisson selon l'une quelconque des revendications précédentes, caractérisé en ce des moyens de mélange (4.11.3) sont prévus.

12. Distributeur de boisson selon l'une quelconque des revendications précédentes, **caractérisé en ce que** des moyens de communication de données (4.24) sont prévus.

13. Distributeur de boisson selon l'une quelconque des revendications précédentes, **caractérisé en ce qu'**une arrivée de détergent liquide (4.3) est prévue dans une chambre d'infusion.

14. Distributeur de boisson selon l'une quelconque des revendications précédentes, **caractérisé en ce qu'**un détergent liquide (3.1) dissolvant les graisses et/ou les huiles et/ou les protéines et/ou les polysaccharides est prévu, et/ou **en ce que** le détergent liquide comprend un agent de détartrage.

15. Distributeur de boisson selon l'une quelconque des revendications précédentes, **caractérisé en ce que** le raccord de transmission (4.22.4 ; 4.11.8) est conçu sous forme de crabot.

16. Distributeur de boisson selon l'une quelconque des revendications précédentes, **caractérisé en ce que** le récipient (3) est de conception flexible.

17. Distributeur de boisson selon l'une quelconque des revendications précédentes 1 à 15, **caractérisé en ce que** le récipient interchangeable (3) est prévu sous la forme d'un récipient rigide comprenant une ouverture de ventilation (3.3) ou une soupape de ventilation.

18. Distributeur de boisson selon l'une quelconque des revendications précédentes, **caractérisé en ce qu'**une soupape d'évacuation est prévue sur le récipient interchangeable (3).

19. Distributeur de boisson selon l'une quelconque des revendications précédentes, **caractérisé en ce que** des moyens d'identification et/ou d'authentification optique, par exemple un marqueur de couleur et/ou lumineux, un marqueur luminescent et/ou de fluorescent, des moyens de réfraction, de diffusion, de focalisation, d'absorption, d'émission de lumière ou de décalage spectral sont fournis.

20. Récipient interchangeable de détergent liquide (3) avec détergent liquide (3.1), **caractérisé en ce qu'**il est destiné à être utilisé dans un distributeur de boisson (1) selon l'une quelconque des revendications précédentes, qui présente une pompe doseuse (4.11) intégrée au moins partiellement dans un récipient de liquide prévu pour recevoir le détergent liquide du récipient interchangeable de détergent liquide (3), ainsi qu'un élément de raccord de conduite (4.11.3) pour un raccordement d'une conduite de détergent liquide et un élément de raccord de transmission (4.11.8) pour le couplage mécanique d'un entraînement de la pompe doseuse.
